# EUROPÄISCHE PATENTANMELDUNG

(11) **EP 1 927 783 A2**
(43) Veröffentlichungstag der Anmeldung: **04.06.2008**
(21) Anmeldenummer: 07018275.3
(22) Anmeldetag: 18.09.2007
(51) Int. Cl.: F16F 9/46

(54) **Verstellbares Dämpfventil mit einer Fail-safe-Dämpfkraftkennlinie**

(30) Priorität: 30.09.2006 DE 102006046609
(71) Anmelder: ZF Friedrichshafen AG, 88038 Friedrichshafen (DE)
(72) Erfinder: Heyn, Steffen, 97464 Niederwerrn (DE); Zeißner, Bernd, 97332 Gaibach (DE)

(57) **Zusammenfassung**

Verstellbares Dämpfventil (1), umfassend einen Aktuator (5,7), der auf einen Ventilkörper (9) eine Stellkraft gegen eine Federkraft ausübt, um einen die Dämpfkraft bestimmenden Drosselquerschnitt (11) zu beeinflussen, wobei dem Drosselquerschnitt (11) bezogen auf die Strömungsrichtung eines Dämpfmediums ein Notbetriebventil (55) parallel geschaltet ist, und der Ventilkörper (9) mit zwei Steuerflächen (31,33) eine axiale Betriebsbewegung ausführt und dabei wechselseitig an zwei Ventilsitzflächen (23,25) zur Anlage kommen kann, wobei der Ventilkörper (9) in Längsrichtung zweiteilig ausgeführt ist und jede Ventilkörperbaugruppe eine Steuerfläche aufweist.

## Beschreibung

Die Erfindung betrifft ein verstellbares Dämpfventil gemäß dem Oberbegriff von Patentanspruch 1.

Schwingungsdämpfer mit verstellbarer Dämpfkraft verfügen vielfach über einen elektromechanischen Aktuator, der den Querschnitt einer Ventilöffnung beeinflusst. Man hat frühzeitig den Sicherheitsgedanken in die Entwicklung der verstellbaren Schwingungsdämpfer einfließen lassen und dabei Aktuatoren verwendet, die den Querschnitt der Ventilöffnung im stromlosen Zustand unter Verwendung einer auf einen Ventilkörper wirksamen Feder minimieren. Beispielhaft wird auf die DE 35 18 327 C2 verwiesen. Das Ziel bestand darin, eine große Dämpfkrafteinstellung zu erreichen, um für alle Federungszustände eine ausreichend Dämpfkraft erreichen zu können.

Der Anteil mit maximaler Dämpfkraft ist im normalen Fahrbetrieb vergleichsweise klein. Bei einem Aktuator in der Bauart nach der DE 35 18 327 C2 besteht der Nachteil, dass dieser mit einem großen Stellstrom betrieben werden, um eine weiche Dämpfkrafteinstellung zu erreichen, da die Kraft der Magnetspule gegen die Kraft der Feder wirkt. Je größer die Kraft der Magnetspule umso größer ist der Durchtrittsquerschnitt am verstellbaren Dämpfventil und umso kleiner ist die erreichbare Dämpfkraft, so dass ein komfortables Fahrverhalten vorliegt.

Die mit dem Bauprinzip des Aktuators verbundenen Nachteile haben zu den Überlegungen geführt, dass eine mittlere Dämpfkraftkennlinie für den Notbetrieb des verstellbaren Schwingungsdämpfers besser wäre. Es sind verschiedene Konstruktionswege beschritten worden, u. a. wie in der DE 39 17 064 A1 beschrieben ist.

In der Variante nach Figur 1 DE 39 17 064 A1 kommt ein Ventilkörper 50 zur Anwendung, der zwei Steuerteile 75; 76 aufweist, die mit Ventilsitzen 86, 88 zusammenwirken. Der Aktuator 44; 46 muss gegen die Kraft der Rückstellfeder 82 eine Öffnungskraft ausüben, um die Steuerteile für die weichste Dämpfkraftkennlinie in einer Mittelstellung zu halten. Wenn der Aktuator ausfällt, dann liegt das Steuerteil 76 an dem Ventilsitz 88 an und minimiert den Abfluss aus dem Druckraum 64. Es stehen dann die schräg verlaufende Drosselstelle 108 und eine mit einem Notbetriebventil versehene Drosselstelle 88 für den Abfluss des Dämpfmediums aus dem Druckraum zur Verfügung.

Die Variante nach Fig. 2 der DE 39 17 064 A1 funktioniert sehr ähnlich. Abweichend kommt eine Kugel als Ventilkörper zur Anwendung. Des Weiteren verläuft die dem Ventilkörper hydraulisch parallel geschaltete Drosselstelle 108 in Längsrichtung durch eine Zwischenwand des Dämpfventils. Beiden Ausführungen ist jedoch gemeinsam, dass sie zwar ein Funktionsprinzip beschreiben, jedoch die technische Umsetzung erhebliche Schwierigkeiten bereitet, da einerseits der zur Verfügung stehende Bauraum sehr klein und anderseits die geforderte Präzision der Bauteile sehr hoch ist. Die beiden Figuren zeigen keine Bauteilgrenzen, die eine Montage, z. B. des Ventilkörpers 50 ermöglichen.

Aufgabe der vorliegenden Erfindung ist es, eine herstellbare Variante für ein verstellbares Dämpfventil mit einer Notbetriebkennlinie abweichend von einer maximal großen oder kleinen Dämpfkrafteinstellung zu realisieren.

Erfindungsgemäß wird die Aufgabe dadurch gelöst, dass der Ventilkörper in Längsrichtung zweiteilig ausgeführt ist und jede Ventilkörperbaugruppe eine Steuerfläche aufweist.

Durch die zweiteilige Bauweise kann der Ventilkörper eine Öffnung, an der die Ventilsitzflächen für den Ventilkörper ausgeführt sind, durchdringen und trotzdem liegt eine einfache Montage vor.

In weiterer vorteilhafter Ausgestaltung weist die die Notbetriebstellung bestimmende Ventilkörperbaugruppe einen Befestigungsbolzen auf, der eine die Ventilsitzflächen aufweisende Ventilscheibe durchdringt. Der Befestigungsbolzen kann mit einem Befestigungsgewinde oder über eine Schweißung oder Presspassung ausgeführt sein und die beiden Ventilkörperbäugruppen miteinander verbinden.

Gemäß einem weiteren vorteilhaften Unteranspruch weist die Ventilkörperbaugruppe einen Axialkanal für das Dämpfmedium im Notbetrieb auf.

Der Befestigungsbolzen ist mit einer Aufnahmehülse für den Axialkanal ausgeführt, wobei in der Aufnahmehülse eine Ventilhülse für ein Notbetriebventil angeordnet ist. Durch die geschachtelte Bauweise können sehr einfach konturierte Bauteile verwendet werden.

Dabei weist die Ventilhülse einen Boden mit einer Notbetriebventilsitzfläche und eine axiale Abstützfläche für eine Notbetriebventilfeder auf.

Zur einfachen Fixierung ist die Ventilhülse in der Aufnahmehülse eingepresst.

Es ist vorgesehen, dass sich die Feder, die gegen die Kraft des Aktuators wirkt, auf einer Schraubscheibe eines Dämpfventilgehäuses abstützt. Die Feder sorgt für eine Vorspannung innerhalb der Gewindeverbindung der Schraubscheibe und dient damit zusätzlich als Gewindesicherung an der Schraubscheibe.

Die Ventilsitzflächen sind auf einer vom Dämpfventilgehäuse demontierbaren Ventilsitzscheibe ausgeführt, wobei die Ventilsitzscheibe von einer Vorspannfeder gegen eine Wandung des Dämpfventilgehäuses fixiert wird. An der vergleichsweise filigranen Ventilscheibe sind keinerlei Schweiß- oder Verstellmaßnahmen zur Befestigung innerhalb des Dämpfventilgehäuses notwendig.

Anhand der folgenden Figurenbeschreibung soll die Erfindung näher erläutert werden.

Es zeigt:
- Fig. 1: verstellbares Dämpfventil in Schnittdarstellung
- Fig. 2: Teilvergrößerung von Fig. 1
- Fig.3: Notbetriebstellung

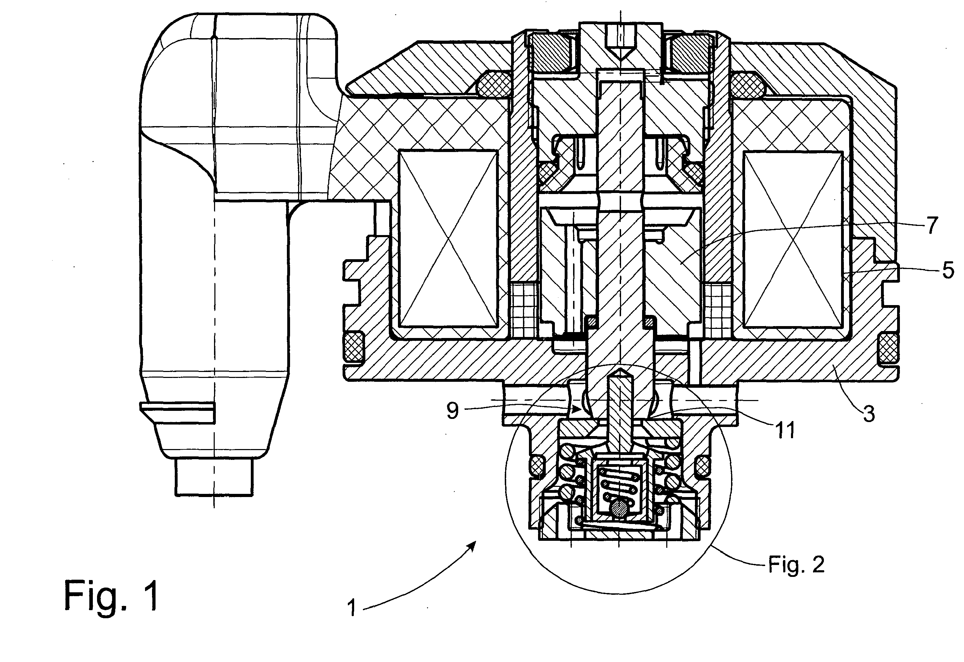

Die Fig. 1 zeigt ein verstellbares Dämpfventil 1 in der Bauart eines Vorstufenventils mit einem Ventilgehäuse 3, in dem eine Magnetspule 5 mit einem axial verschiebbaren Anker einen Aktuator 7 bilden. Der Aktuator 7 wirkt auf einen Ventilkörper 9, der einen Drosselquerschnitt 11 bestimmt, um den Abfluss aus einem nicht dargestellten Druckraum als Teil eines Hauptdämpfventils zu verändern. Je drosselfreier der Abfluss erfolgen kann, umso kleiner ist die druckabhängige Schließkraft auf einen Ventilkörper eines Hauptstufenventils. Beispielhaft wird auf die DE 41 04 110 A1 verwiesen.

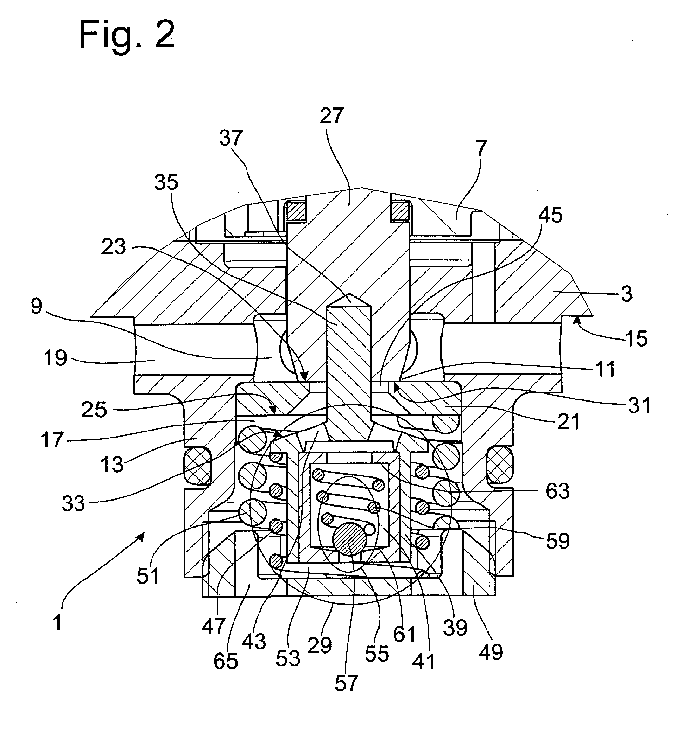

Die Figur 2 beschränkt sich auf die Darstellung des unteren Endes des Ventilkörpers 9. Das Ventilgehäuse 3 verfügt über einen topfförmigen Grundkörper mit einem hülsenförmigen Anschluss 13. Zwischen dem Anschluss 13 und einem Boden 15 des Grundkörpers besteht eine Durchgangsöffnung 17, der sich radiale Abflussöffnungen 19 anschließen. Der Ventilkörper 9 ist axial verschiebbar gelagert und durchdringt eine kreisringförmige Ventilsitzscheibe 21, die am Grundkörper anliegt. Die Ventilsitzscheibe 21 verfügt jeweils an einer Deckseite über eine Ventilsitzfläche 23; 25 für den Ventilkörper 9. Der Ventilkörper 9 ist in Längsrichtung zweiteilig aufgebaut, so dass zwei Ventilkörperbaugruppen 27; 29 vorliegen, die jeweils eine Steuerfläche 31; 33 aufweisen, die in Abhängigkeit der Axialposition des Ventilkörpers 9 wechselseitig an den Ventilsitzflächen 23; 25 der Ventilsitzscheibe 21 anliegen können.

Die eine Notbetriebstellung bestimmende Ventilkörperbaugruppe 29 verfügt über einen Befestigungsbolzen 35, der die Ventilsitzscheibe 21 durchdringt und in eine Sacklochöffnung 37 der zweiten Ventilkörperbaugruppe 27 eingreift. An dem Befestigungsbolzen 35 kann beispielsweise ein Befestigungsgewinde, eine Schweißung, eine Klebung oder eine Presspassung mit der Sacklochöffnung 37 ausgeführt sein.

Dem Befestigungsbolzen 35 schließt sich eine Aufnahmehülse 39 an, in der ein Axialkanal 41 für einen Dämpfmediumdurchfluss im Notbetrieb ausgeführt ist. Die Aufnahmehülse 39 verfügt in Richtung der Ventilsitzscheibe über eine konisch ausgeführte Steuerfläche 33, die an der unteren Ventilsitzfläche 25 zur Anlage kommen kann. In der Steuerfläche 33 ist mindestens eine Öffnung 43 ausgeführt, die zumindest teilweise radial innerhalb einer Durchgangsöffnung 45 der Ventilsitzscheibe 21 verläuft. An einem umlaufenden Kragen der Aufnahmehülse 39 greift eine Druckfeder 47 an, die sich axial an einer Schraubscheibe 49 abstützt, die wiederum mit dem hülsenförmigen Anschluss 13 des Dämpfventilgehäuses 3 verschraubt ist. Die Druckfeder 47 wirkt gegen die Kraft des Aktuators 5; 7.

An der Schraubscheibe 49 stützt sich eine Vorspannfeder 51 ab, die die axial bewegliche Ventilsitzscheibe 21 gegen den Boden 15 des topfförmigen Grundkörpers fixiert. Die Vorspannkraft der Vorspannfeder 51 ist größer als die maximale Stellkraft des Aktuators, so dass die Ventilsitzflächen 23; 25 stets zum Ventilgehäuse fixiert sind.

In der Aufnahmehülse 39 ist eine Ventilhülse 53 für ein Notbetriebventil 55 angeordnet. Das Notbetriebventil umfasst einen Schließkörper 57, der von einer Notbetriebventilfeder 59 vorgespannt wird. Die Ventilhülse 53 weist auf einem Boden eine Notbetriebventilsitzfläche 61 und eine axiale Abstützfläche 63 für die Notbetriebventilfeder 59 auf, wobei die Ventilhülse 53 in der Aufnahmehülse 39 eingepresst ist.

Je nach Bauweise des Hauptstufenventils Im Normalbetrieb wirkt sich die Aktuatorkraft gegen die Druckfeder 47 der Ventilbaugruppe 27 aus. So kann die Ventilbaugruppe 27 den Drosselquerschnitt 11 zwischen der Ventilsitzfläche 23 auf der Oberseite der Ventilsitzfläche 21 und einer Steuerfläche 31 an der Ventilbaugruppe 27 mit zunehmender Bestromung verschließen.

Bei einem Hauptstufenventil, dessen druckbeauschlagte Flächen in Schließrichtung größer ist als die druckbeaufschlagte Fläche in Öffnungsrichtung, stellt sich ein anderes Betriebsverhalten ein. Bei einer derartigen Ausführung nimmt der Ventilkörper 9 einen konstanten Funktionsabstand, d. h. konstante Höhe des Drosselquerschnitts 11, zur Ventilsitzfläche 23 ein. Aufgrund der variablen Bestromung des Aktuators 7 wird die Schließkraft auf den Ventilkörper 9 eingestellt, wodurch in Folge eine unterschiedliche Druckdifferenz zwischen den druckbeaufschlagten Flächen in Öffnungs- und Schließrichtung am Hauptstufenventilkörper erreicht wird, wobei die Druckdifferenz wiederum den Abhubweg des Hauptstufenventilkörpers bestimmt.

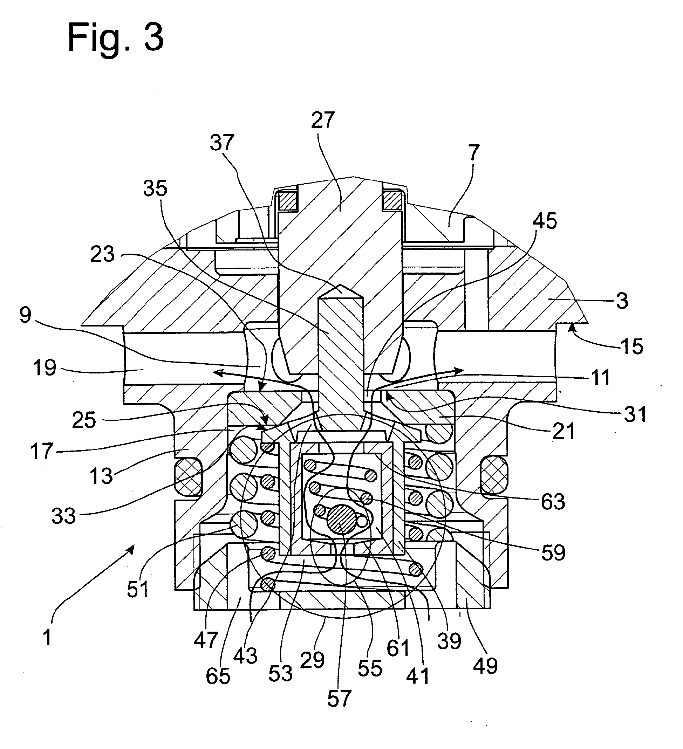

In Fig. 2 ist der Drosselquerschnitt bei maximaler Bestromung des Aktuators 7 gegen die Kraft der Feder 47 vollständig verschlossen dargestellt. Sollte der Aktuator oder die Stromversorgung defekt sein, dann verschiebt die Druckfeder 47 axial den gesamten Ventilkörper 9, so dass die Steuerfläche 33 der Ventilbaugruppe 29 an der Unterseite der Ventilsitzscheibe 21 anliegt, wie in Fig. 3 gezeigt ist. Das über Öffnungen 65 in der Schraubscheibe 49 einströmende Dämpfmedium kann nicht außenseitig an der Aufnahmehülse 39 durch die Ventilsitzscheibe 21 strömen, da dieser Strömungsweg von der Aufnahmehülse 39 bzw. der Steuerfläche 33 blockiert ist. In Abhängigkeit des Drucks, der auf den Schließkörper 57 des Notbetriebventils 55 wirkt, kann dieser gegen die Kraft der Notbetriebventilfeder 59 von der Notbetriebventilsitzfläche 61 abheben und das Dämpfmedium durch den Axialkanal 41 und weiter durch die Ventilsitzscheibe 21 in Richtung der Abflussöffnungen 19 abströmen. Die Dimensionierung der druckbeaufschlagten Fläche am Schließkörper 57 entsprechend der Querschnittsfläche der Öffnung im Boden der Ventilhülse und der Federvorspannung der Notbetriebventilfeder legt eine beliebige Dämpfkraftkennlinie für das verstellbare Dämpfventil für den Notbetrieb fest, da die Querschnitte des Axialkanals 41 oder der Öffnungen 43 deutlich größer ausgeführt sind als die druckbeaufschlagte Fläche 57.

## Patentansprüche

1. Verstellbares Dämpfventil (1), umfassend einen Aktuator (5;7), der auf einen Ventilkörper (9) eine Stellkraft gegen eine Federkraft ausübt, um einen die Dämpfkraft bestimmenden Drosselquerschnitt (11) zu beeinflussen, wobei dem Drosselquerschnitt (11) bezogen auf die Strömungsrichtung eines Dämpfmediums ein Notbetriebventil (55) parallel geschaltet ist, und der Ventilkörper (9) mit zwei Steuerflächen (31;33) eine axiale Betriebsbewegung ausführt und dabei wechselseitig an zwei Ventilsitzflächen (23;25) zur Anlage kommen kann,
**dadurch gekennzeichnet,**
**dass** der Ventilkörper (9) in Längsrichtung zweiteilig ausgeführt ist und jede Ventilkörperbaugruppe (27;29) eine Steuerfläche (31;33) aufweist.

2. Verstellbares Dämpfventil nach Anspruch 1,
**dadurch gekennzeichnet,**
**dass** die die Notbetriebstellung bestimmende Ventilkörperbaugruppe (29) einen Befestigungsbolzen (35) aufweist, der eine die Ventilsitzflächen (23; 25) aufweisende Ventilsitzscheibe (21) durchdringt.

3. Verstellbares Dämpfventil nach Anspruch 1,
**dadurch gekennzeichnet,**
**dass** die Ventilkörperbaugruppe (29) einen Axialkanal (41) für das Dämpfmedium im Notbetrieb aufweist.

4. Verstellbares Dämpfventil nach den Ansprüchen 2 und 3,
**dadurch gekennzeichnet,**
**dass** der Befestigungsbolzen (35) mit einer Aufnahmehülse (39) für den Axialkanal (41) ausgeführt ist.

5. Verstellbares Dämpfventil nach Anspruch 4,
**dadurch gekennzeichnet,**
**dass** in der Aufnahmehülse (39) eine Ventilhülse (53) für das Notbetriebventil (55) angeordnet ist.

6. Verstellbares Dämpfventil nach Anspruch 5,
**dadurch gekennzeichnet,**
**dass** die Ventilhülse (53) einen Boden mit einer Notbetriebventilsitzfläche (61) und eine axiale Abstützfläche (63) für eine Notbetriebventilfeder (59) aufweist.

7. Verstellbares Dämpfventil nach Anspruch 5,
**dadurch gekennzeichnet,**
**dass** die Ventilhülse in der Aufnahmehülse eingepresst ist.

8. Verstellbares Dämpfventil nach Anspruch 1,
**dadurch gekennzeichnet,**
**dass** sich die Druckfeder (47), die gegen die Kraft des Aktuators (5; 7) wirkt, auf einer Schraubscheibe (49) eines Dämpfventilgehäuses (3) abstützt.

9. Verstellbares Dämpfventil nach Anspruch 2,
**dadurch gekennzeichnet,**
**dass** die Ventilsitzflächen (23;25) auf einer vom Dämpfventilgehäuse (3) trennbaren Ventilsitzscheibe (21) ausgeführt sind.

10. Verstellbares Dämpfventil nach Anspruch 9,
**dadurch gekennzeichnet,**
**dass** die Ventilsitzscheibe (21) von einer Vorspannfeder (51) gegen eine Wandung des Dämpfventilgehäuses (3) fixiert wird.
